# EUROPEAN PATENT SPECIFICATION

(11) **EP 1 940 096 B1**
(45) Date of publication and mention of the grant of the patent: **18.04.2012**
(21) Application number: 06127198.7
(22) Date of filing: 27.12.2006
(51) Int. Cl.: H04L 12/58, H04L 29/06, H04L 29/12, H04L 29/08

(54) **Method for transferring data between mobile devices**
Verfahren zur Übertragung von Daten zwischen mobilen Geräten
Procédé pour la transmission de données entre des terminaux mobiles

(43) Date of publication of application: 02.07.2008
(73) Proprietor: Swisscom AG, 3050 Bern (CH)
(72) Inventor: Rodellar, Daniel, 1003, Lausanne (CH)
(74) Representative: Scheuzger, Beat Otto

(56) References cited:
- US-A- 6 035 104
- US-A1- 2006 056 431
- DATABASE WPI Week 200669 Derwent Publications Ltd., London, GB; AN 2006-669215 XP002451981 -& JP 2006 229579 A (MATSUSHITA ELECTRIC IND CO LTD) 31 August 2006 (2006-08-31)
- DATABASE WPI Week 200648 Derwent Publications Ltd., London, GB; AN 2006-469310 XP002451970 -& KR 2005 061 980 A (PANTECH CO LTD) 23 June 2005 (2005-06-23)

## Description

### Technical Field of the Invention

The present invention relates to a method for transferring data between a first terminal device and at least one second terminal device, the first terminal device and the second terminal device or devices connecting to and registering with a central unit. The present invention also relates to the particular central unit for carrying out the method.

### Background Art

Making a voice call using a mobile phone basically consists of two steps: in a first step, the user selects the contact of the person he/she wants to call in the address book on the phone, or alternatively dials the phone number of this person. In a second step, the user presses the "call button" on the phone, and the network arranges to make the connection between the two devices. On the other hand, an action of transferring data between two mobile devices, often referred to as a "data call" is nowadays fairly more complicated.

One very common way of transferring data between two mobile devices is the use of the built-in data transfer facilities, such as the infrared interfaces (often called IrDA). When the two devices are in proximity to each other, they can establish an infrared connection. Once the connection is established, data can easily be transferred between the devices. However, a direct visual contact between the two devices is necessary, as infrared beams are not able to cross obstacles. Moreover, the devices must not move during the data transmission, as the connection cannot be upheld in this case.

Bluetooth is another communication technology used nowadays in many mobile devices for transferring data. Bluetooth is a wireless specification that defines short-range radio communication between devices equipped with small, specialised Bluetooth chips. As with the infrared connection, the two devices have first to establish a Bluetooth connection prior to transferring data between each other. However, as radio communication is used, no direct visual contact between the two devices is needed. Still, Bluetooth connection can only be established between devices in a maximal range of a couple of dozens of meters.

Most mobile phones today allow the MMS communication with other mobile phones. MMS (for Multimedia Messaging Service) is a standard for a telephony messaging systems that allow sending messages including multimedia objects (such as images, audio, video, rich text) and not just text messages as in the Short Message Service (SMS). The huge advantage of MMS is that it works with any kind of available communication technology of the existing telecommunication networks: GPRS (General Packet Radio Service), UMTS (Universal Mobile Telecommunication System), or EDGE (Enhanced Data Rates for GSM Evolution). Therefore, the two devices that transfer data between each other do not have to be in near proximity. Nevertheless, creating and sending an MMS message is coupled with an important number of manual operations, which significantly reduces the user comfort. Moreover, the sender does not have any control of the delivery of the message, and thus cannot directly exert influence on the data transfer. On the opposite side, the receiver is not able to decide whether he/she is interested in the data sent by the sender. In addition, the size of attachment in MMS is often restricted, such that many pictures in MMS messages are automatically resized. This is clearly decreasing the picture quality at the recipient side.

E-mail with attachments is still another possibility for transferring data between different mobile devices. In this case, the data are transferred using Internet infrastructure and protocols. In addition to a complicated use and handling, e-mails have similar drawbacks as the MMS. The most important drawback is the separation of the sending and receiving actions, such that neither the sender nor the receiver has any influence on the other device. However, some e-mail providers have very tough restrictions regarding attachments as these can contain dangerous viruses or other malicious software. Therefore, e-mail attachments are often filtered out. Finally, sending large files as an attachment in an e-mail often causes problems owing to limitations of the mailbox size.

On the other hand, peer-to-peer (P2P) networks are very popular for sharing media files over the Internet. Using any of the P2P services, users are able to exchange data files. However, P2P networks rely on a distributed architecture where nodes in the network act as both clients and servers. Users choose the content to be transferred to their devices and the network (i.e. some of its parts) arranges for the data to be transferred between the devices. The user does however not have the possibility to actively start a connection with a dedicated recipient of the content, and cannot control the transfer whatsoever. In addition, no communities can be built in a peer-to-peer network. Users are thus not able to share their data exclusively in the context of a closed community of friends, colleagues, etc.. Moreover, all mobile devices have limited resources, hardware, OS capabilities and network constraints that must be taken into consideration when creating P2P enabled services for mobile devices.

Japanese patent application JP2006-229579 (Matsushita Electric Ind. Co. Ltd.) discloses a system for informing an e-mail sender that an e-mail sent to an e-mail receiver has been read without sending an e-mail back from the e-mail receiver. To this end, the e-mail managing device flags the incoming e-mails and sends the corresponding confirmation to the sender after the receiver accepts the reception and opens the received e-mail.

Korean patent application KR2005-0061980 (Pantech Co. Ltd.) describes a method for selective reception of MMS messages by a terminal. After the server receives a MMS message, it notifies the receiver of this message and indicates the size of the message. The user is able to accept or refuse the reception of the MMS message. If the reception is accepted, the corresponding MMS message is downloaded to the receiver terminal.

US patent application publication US2006/0056431 (Fujitsu Ltd.) discloses a method whereby a control-information receiving unit receives first control information including information relating to an e-mail from a mail server. A control-information transmitting unit transmits either of the second control information relating to a request for setting a communication path and third control information relating to a rejection of communication to the mail server. When it is determined to permit the reception of the e-mail based on the information relating to the e-mail, the control-information transmitting unit transmits the second control information to the mail server; and when it is determined to reject the reception of the e-mail the control-information transmitting unit transmits the third control information to the mail server. By this method the user of the communication terminal is given the possibility to select whether to permit the communication terminal to receive an e-mail that is sent to him/her, without having to pay communication fees.

US patent US-A-6035104 (Data Link Systems Corp.) discloses a method in which an e-mail system implemented on a server having a network connection receives and forwards e-mail messages based on subscriber-supplied criteria. When a message is received addressed to the subscriber, characteristics of the message, such as existence and size of attachments, are compared to characteristics previously supplied by the subscriber. If a match is found, the subscriber is notified, such as by a page to a pager carried by the subscriber, of the message and the nature of the match. Facility is provided at the server for the subscriber to then call the server, log on, and provide instructions for forwarding the matched message. Forwarding may be for instance to a handheld device or a notebook computer operated by the subscriber, or to a mailbox or mailboxes on other servers, or any combination. A subscriber is then in control of points of delivery of incoming e-mail messages.

### Disclosure of Invention

It is an object of the present invention to propose a new method for transferring data between mobile devices which does not have the drawbacks of the prior art. It is in particular an object of the present invention to offer the users the comfort of making voice calls when transferring data between mobile devices.

These and still other objects of this invention are attained by the method and the central unit for transferring data as defined in the independent claims. Further special or preferred embodiments follow moreover from the dependent claims and from the specification.

The above-mentioned objects are achieved through the present invention in particular in that, in a method for transferring data between a first terminal device and at least one second terminal device, whereby the first terminal device and the second terminal device or devices connect to and register with a central unit, the connection data of the first terminal device and the second terminal device are sent to the central unit, the connection data of the terminal device being stored in a lookup table of the central unit in a way assigned to the corresponding terminal device, a first transfer request comprising at least a specification of data to be transferred and an identification of the destination is created and sent to the central unit by the first terminal device, at least one corresponding second terminal device is identified based on the received identification of the destination, and the appropriate connection data of the second terminal device are retrieved from the lookup table of the central unit, a second transfer request is created based on the first transfer request and the retrieved connection data of the second terminal device, and is sent to the second terminal device by the central unit. When the second transfer request is received by the second terminal device, a redirection reply comprising at least an identification of another second terminal device from the group of devices is created and sent to the central unit by the second terminal device, the second transfer request being resent to the other second terminal device of the group of devices by the central unit and the transfer of data is accepted by the other second terminal device, the data being transferred to the other second terminal device.

The advantage of such a method is, among other things, that the simplicity of using telephony services can be used for transferring data (e.g. files). Thus, from the user point of view, the same procedure of dialling a phone number to make a voice call can be used for transferring data. The user comfort can be greatly enhanced. Of course, if the data to be transferred correspond to voice over IP (VoIP) packets, then the data call according to the invention is equivalent to a voice call in terms of user experience. A further advantage is that the user can have the possibility to choose the most convenient device for receiving data. The data can be redirected to a repository or to the device with the biggest memory. On the other hand, a user can choose to redirect the transfer of data to a device of another member of the community, if necessary.

In an embodiment variant, when the first transfer request is received by the central unit, the data to be transferred to the second terminal device are retrieved and stored in a storage module of the central unit. This embodiment variant has the advantage, among other things, that the data to be transferred to the second terminal device are automatically stored in the corresponding storage module of the central unit. The subsequent transfer of data is achieved between the central unit and the second terminal device, without any additional load on the first terminal device. The communication channel between the first terminal device and the central unit is less likely to be congested. Moreover, if the transfer of data between the central unit and the second terminal device fails for any reason, the data can easily be resent from the central unit, without a new request from the first terminal device.

In another embodiment variant, the identification of the destination corresponds to a designation of a group of devices. The advantage of this embodiment is that the data can be transferred to a whole group of devices in a much simpler way. Instead of dialling many different numbers or selecting many different contacts, one single number can be dialled or one single contact selected for sending data to many different terminal devices and/or users.

In a further embodiment variant, the group of devices comprises different second terminal devices of one single user. This embodiment variant has the advantage, among other things, that all different terminal devices of a single user can be grouped together. In particular, one user can possess a whole range of different terminal devices, e.g. one or more mobile phones, fix phones, personal digital assistants (PDA), desktop computers, laptop computers (notebooks), or even game consoles and other similar devices with embedded communication capabilities, etc. Having all different terminal devices of the same user grouped in a particular group of devices can facilitate the transfer of data to the most appropriate terminal device at any time.

In yet another embodiment variant, the group of devices comprises second terminal devices of a particular group of users. This embodiment variant has the advantage, among other things, that the transfer of data to terminal devices of a particular group of users can be simplified. The users of a group can e.g. be friends, employees of a particular company or members of a particular user community. Other possible groups comprise participants in a particular game or subscribers to a particular service.

In a further embodiment variant, the identification of the group of devices is a telephone number and/or a user name. The advantage of this embodiment variant is, among other things, that all devices of the same user can be referenced by one single identification. Otherwise, all members of a community can also be easily referenced by one single name or telephone number, whereby the user comfort can be significantly improved.

In another embodiment variant, the connection data of the terminal device comprise the IP-address and/or port number of the device. This embodiment variant has the advantage, among other things, that the central unit stores the most relevant data needed for the establishment of a communication connection with the corresponding terminal device. No additional steps are required when creating a transfer request or when sending the appropriate data to the destination. The overall transfer velocity can be increased.

In a further embodiment variant, the transfer request from the central unit to the second terminal device is sent through a first communication channel, and the data from the central unit to the second terminal device are transferred through a second communication channel. The advantage of this embodiment variant is, among other things, that different communication channels can be used for transferring different types of data. Transfer requests and data can in particular be sent to the second terminal devices using always the most appropriate communication channel. Moreover, mobile devices can easily change their location and thus frequently change the kind or type of available connection technologies. Thus, this embodiment variant enables a more reliable and more advantageous transfer of data at any moment.

In another embodiment variant, the data are transferred to each second terminal device through a separate communication channel. This embodiment variant has the advantage, among other things, that separate communication channels are established for different terminal devices. In this way, the transfer of data to each single terminal device can be achieved in a completely independent way. The transfer of data to one terminal device can therefore be completed even if the transfer of data to another device failed for any reason.

In yet another embodiment variant, the first transfer request comprises at least two identifications of the destination, at least two corresponding second terminal devices being identified based on the received identifications of the destination, and the appropriate connection data of the identified second terminal devices being retrieved from the lookup table of the central unit, at least two second transfer requests being created based on the first transfer request and the retrieved connection data of the identified second terminal devices, and sent to the at least two second terminal devices by the central unit, and the transfer of data is accepted by the at least two second terminal devices, the data being transferred to the two second terminal devices. The advantage of this embodiment variant is, among other things, that data can be transferred to various terminal devices with a single request. The user comfort can be increased significantly, while waste of communication resources can be significantly reduced.

In another embodiment variant, the transfer of data to the at least two second terminal devices is simultaneous. This embodiment variant has the advantage, among other things, that all members of one community or chosen recipients can receive data at the same time. No delay in respective reception is caused, and there is no need for establishing and managing priority between different recipients. The advantage of this embodiment variant is particularly relevant in transferring important data (e.g. alerts) to a huge number of users.

In a further embodiment variant, the data to be transferred to the at least two second terminal devices are divided into at least two chunks by the central unit, different chunks being transferred to different second terminal devices, and the missing chunks are interchanged between the at least two second terminal devices through separate communication channels. This embodiment variant has the advantage, among other things, that the quantity of data being transferred between the central unit and different terminal devices can be considerably reduced. The use of communication resources can be optimised, and the workload on the central unit can be significantly reduced. Thus, the overall transfer speed can be increased.

In another embodiment variant, at least one communication channel is encrypted. The advantage of this particular embodiment variant is, among other things, that at least the transmission of some requests, replies and data between the terminal devices and/or central unit can be secured. The particular advantage of this embodiment is the ensured privacy protection. Thus, according to this embodiment variant, any kind of data can be transferred in a secure way, without any possible intrusions.

At this point, it should be stated that, besides the method for transferring data according to the particular embodiments of the invention, the present invention also relates to a central unit and a terminal device for carrying out the method.

### Brief Description of the Drawings

Other features and advantages of the invention will become apparent from the following description of an embodiment thereof, presented as a non-limiting example, when read in connection with the accompanying drawing in which:
Figures 1, 2, 3, 4 and 5 show block diagrams representing schematically particular embodiments of the method for transferring data according to the invention.
Figure 6 shows a block diagram representing schematically a particular embodiment of the central unit for carrying out the method according to the invention.

### Description of Specific Embodiments of the Invention

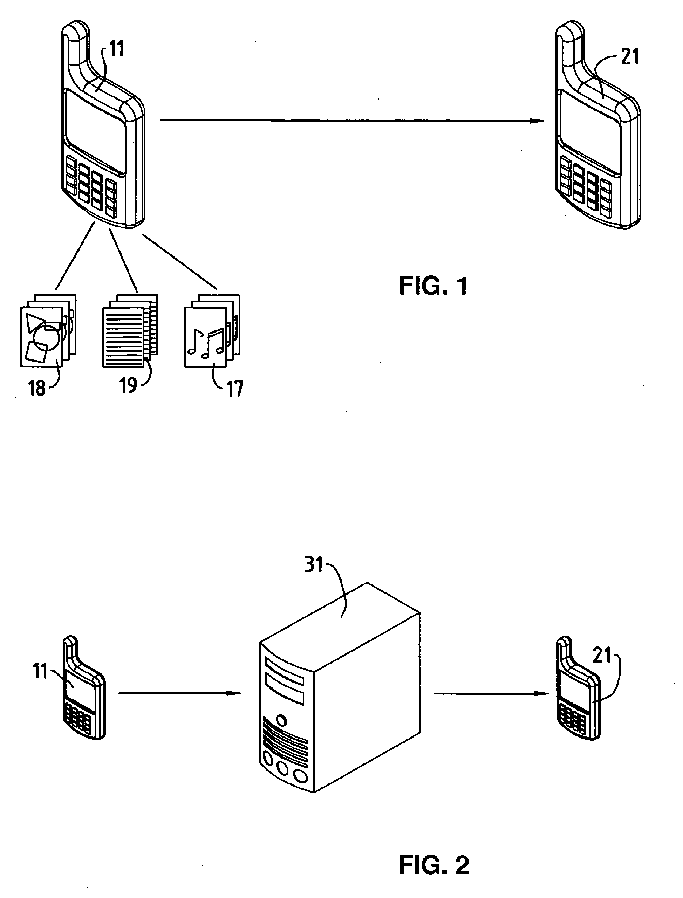

Figure 1 illustrates schematically a particular embodiment of the method for transferring data according to the invention. In Figure 1, the reference numeral 11 refer to a first terminal node, and the reference numeral 21 to a second terminal node. The terminal nodes 11 and 21 are preferably portable mobile devices, such as a mobile phones, smartphones or PDAs (Personal Digital Assistant). The terminal nodes 11 and 21 can however also be laptop, respectively notebook computers, mobile music players (e.g. iPod) or any other similar device. Both the first terminal device 11 and the second terminal device 21 have a particular identification. This identification can in particular be a common phone number, a particular user name, a device nickname or an IP-address of the particular communication interface. The identification of a terminal device can also comprise different elements, e.g. a combination of a user name and the phone number (especially useful if one single user possess more than one device of the same type). One terminal device can also have two or more different identifications, if necessary. In Figure 1, the transfer of data is carried out from the first terminal node 11 to the second terminal node 21. The data to be transferred from the first terminal node 11 to the second terminal node 21 can in particular comprise music data 17, picture data 18 or text data 19. However, data to be transferred are certainly not limited to only these three types and can comprise any other type of data (such as spreadsheets, contact data, project data, OS core data, video files etc.).

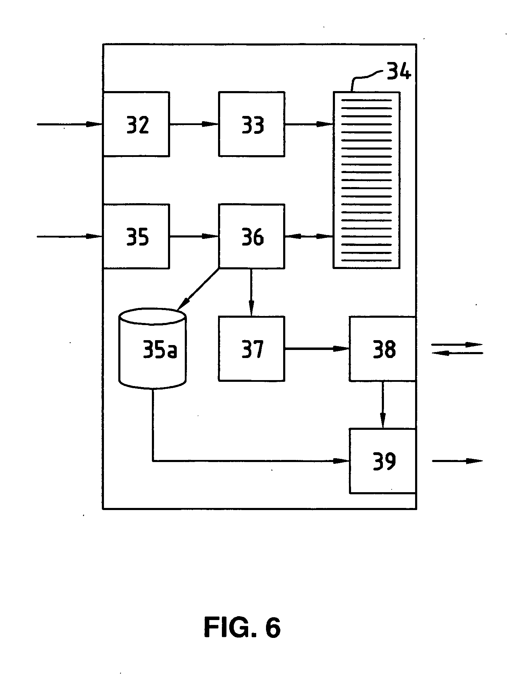

Figure 2 illustrates schematically another particular embodiment of the method for transferring data according to the invention. In Figure 2, the reference numerals 11 and 21 refer again to the first and second terminal nodes, respectively. The reference numeral 31 refer to a central unit. The terminal nodes 11 and 21 are devices with at least one communication interface for connecting to the central unit 31. Communication interfaces of terminals 11 and 21 may in particular comprise a communication interface for connecting to a wired network, e.g. according to the IEEE 802.3 Ethernet Standard, a network interface for connecting to distant networks over a Public Switched Telephone Network (PSTN), e.g. by means of a modem, a network interface for connecting to a Wireless Local Area Network (WLAN), e.g. according to the IEEE 802.11 standard, a network interface for connecting to a GSM (Global System Mobile) or UMTS (Universal Mobile Telecommunications System) -based mobile network, as well as a network interface for a Personal Area Network (PAN), i.e. directly connecting to closely located devices, e.g. according to a Bluetooth, an IrDA (infrared Data Association) or ZigBee standard. Moreover, the terminal nodes 11 and 21 can also be devices with two or more network interfaces of a same or different connection technology. For example, a smartphone, can typically be equipped with at least two network interfaces, one for the Wi-Fi (IEEE 802.11) standard, and another for the GSM and/or UMTS standards. However, other combinations of network interfaces are conceivable. In Figure 2, the transfer of data between the first terminal device 11 and the second terminal device 21 is realised through the central unit 31. The central unit 31 operates as an intermediary between the two terminal devices 11 and 21. In particular, this implies that the terminal devices 11 and 21 connect to and register with the central unit 31, prior to being able to transfer data between each other. During the registration of the terminal devices 11, 21 with the central unit 31, their connection data are stored in the central unit 31 in a way assigned to the corresponding terminal device 11, 21. The structure and the operation of a particular embodiment of the central unit 31 according to the invention will be described beneath with reference to Figure 6.

In Figure 6, the reference numeral 32 refers to a connection module for receiving connection data of the first terminal devices 11, ..., 14 and the second terminal devices 21, ..., 24, the reference numeral 33 to a store module for storing the received connection data of the terminal devices 11, 12, ..., 24 in a lookup table (reference numeral 34) in a way assigned to the corresponding terminal device 11, 12, ..., 24. The reference numeral 35 refers to a reception module for receiving a first transfer request comprising at least a specification of data 17, 18, 19 to be transferred and an identification of the destination from the first terminal device 11, ..., 14. An identification module for identifying at least one corresponding second terminal device 21, ..., 24 based on the received identification of the destination and retrieving the appropriate connection data of the identified second terminal device 21, ... , 24 from the lookup table 34 is referenced to by the reference numeral 36. In Figure 6, the reference numeral 37 refers to a query module for creating a second transfer request based on the received first transfer request and the retrieved connection data of the second terminal device 21, ..., 24, and the reference numeral 38 refers to a transmission module for sending the second transfer request to the second terminal device 21, ..., 24, and for receiving the transfer reply from the second terminal device 21, ... , 24. The reference numeral 39 refers to a transfer module for transferring data 17, 18, 19 to the second terminal device 21, ..., 24.

When data are to be sent from the first terminal device 11 to the second terminal device 21, the first terminal device 11 creates a transfer request and transmits this transfer request to the central unit 31. This transfer request of the first terminal device 11 comprises at least an identification of the destination (i.e. of the second terminal device 21) and a specification of data to be transferred. As described above, the identification of the destination can comprise any available and appropriate identification of the second terminal device 21, e.g. the phone number of the terminal device 21. However, the identification of destination can be any other appropriate identification. The specification of data to be transferred can e.g. comprise the name and type of the data file to be transferred, the file size, the description or any other information. The central unit 31 receives the transfer request of the first terminal device 11 and analyses the request adequately. Based on the received identification of the destination, the central unit 31 identifies the corresponding second terminal device 21 and retrieves the stored connection data of the second terminal device 21. After that, the central unit 31 creates another transfer request, based on the first transfer request and the retrieved connection data of the second terminal device 21, and sends this second transfer request to the second terminal device 21. The second terminal device 21 then receives and analyses the second transfer request. If the transfer of data should be accepted, a corresponding transfer reply is sent back to the central unit 31. Subsequently, data can be transferred to the second terminal device 21.

The user experience is basically analogous to the action of making a regular voice call. In a first step, a phone number of the peer is dialled or the respective contact selected in the contacts list of the phone. Then, the data to be sent to the peer are selected. Finally, the "call" button is pressed. The selected peer is notified of an incoming "data call". This can in particular again be realised in a way analogue to the ring tone of an incoming voice call. As with a voice call, the device can display the phone number or any other identification of the sender. User can accept the incoming data call by simply pressing the "OK" button. Data are then transferred to the corresponding device.

When the central unit 31 has received the first transfer request from the first terminal device 11, the data to be sent to the second terminal device 21 can be directly uploaded from the first terminal device 11 to the central unit 31. In this case, the data are buffered at the central unit 31. When the second terminal device 21 accepts the transfer of data, the central unit 31 can use these buffered data and send them directly to the second terminal device 21. This can clearly reduce the overall time of transfer of data. In addition, should the transfer of data between the central unit 31 and the second terminal device 21 fail for any reason, data can easily be resent, without the first terminal device 11 being affected. Of course, data do not have to be stored at the central unit 31 and can be transferred from the first terminal device 11 only after the second terminal device 21 has accepted the transfer of data. In this case, data can be transferred either by intermediary of the central unit 31 or directly from the first terminal device 11 to the second terminal device 21 (peer-to-peer communication).

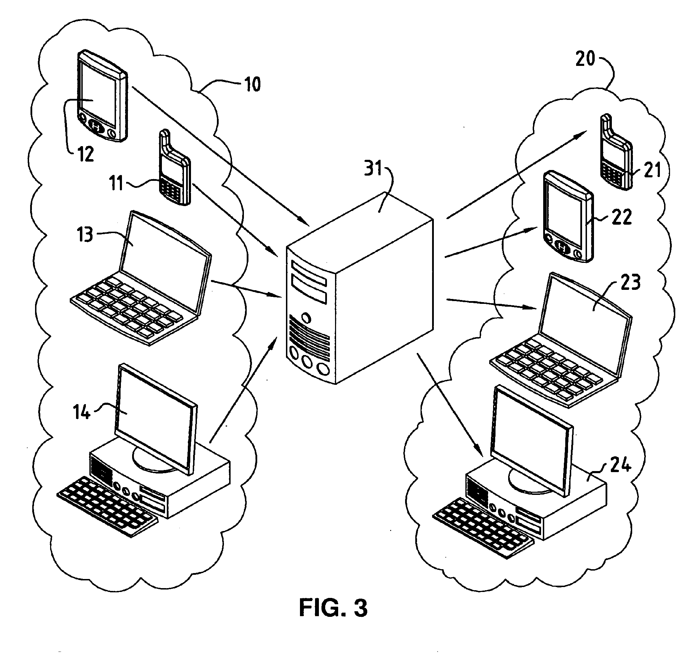

Figure 3 illustrates schematically another particular embodiment of the method for transferring data according to the invention. In Figure 3, the reference numerals 11, 12, 13 and 14 refer to first terminal nodes, and the reference numerals 21, 22, 23 and 24 refer to second terminal nodes. The first terminal nodes 11, 12, 13 and 14, as well as second terminal nodes 21, 22, 23 and 24 can be portable mobile devices, such as mobile phones, PDAs (Personal Digital Assistant) or smartphones, laptop or notebook computers, or desktop devices, either standalone computers or terminals connected to a server. The first and second terminal nodes 11, ..., 24 can also be game consoles, portable music or video players or other similar terminal devices, if they have at least one appropriate communication interface for connecting to the central unit 31.

The first terminal devices 11, 12, 13 and 14 are members of a group of terminal devices 10, while the second terminal devices 21, 22, 23 and 24 are members of a group of terminal devices 20. The groups of terminal devices 10 and 20 can for example comprise different terminal devices of one single user (e.g. a mobile phone 11, a PDA 12, a laptop computer 13 and a desktop computer 14 of one single user). On the other hand, the groups of terminal devices 10 and 20 can likewise comprise different terminal devices of a group of users. The groups of terminal devices 10 and 20 can in particular comprise different terminal devices of the members of a family (e.g. a mobile phone 21 of the son, the PDA 22 of the father, the laptop computer 23 of the mother and the desktop computer 24 of the daughter). However, the groups of terminal devices 10 and 20 can also comprise terminal devices of any other collection of users, such as terminal devices of the members of a virtual community, subscribers to a particular service (e.g. download of ring tones for the mobile phones or reception of news data), employees of a particular company, participants in a game or similar. Each terminal device 11, ..., 24 of a group of terminal devices 10 and 20 has one or more individual identifications, as described above. Nevertheless, a group of terminal devices 10, 20 can also have particular group identification. This group identification can also be a phone number, a particular user name or a particular group name. Likewise, the identification of a group of terminal devices 10, 20 can also comprise different elements. Also, one group of terminal devices can also have different identifications, if necessary.

When data are to be sent from a first terminal device 11, ..., 14 of the group of terminal devices 10 to one or more second terminal devices 21, ..., 24, the first terminal device 11, ..., 14 creates again a transfer request and transmits this transfer request to the central unit 31. In this transfer request, the identification of the destination corresponds to the identification of the group of terminal devices 20. Alternatively, this transfer request can comprise two or more identifications of the destination (e.g. two different phone numbers). Like explained before, the identification of the group of terminal devices 20 can comprise any available and appropriate identification, e.g. the group nickname or the user name if the group corresponds to different terminal devices of the same user. In this case, after the central unit 31 has received the transfer request of the first terminal device 11, the corresponding second terminal devices 21, ..., 24 are identified based on the received identification(s) of the destination and the stored connection data of the second terminal devices 21, ..., 24 are retrieved. Then, different transfer requests are generated by the central unit 31 and sent to all identified second terminal devices 21, ..., 24. The second terminal devices 21, ..., 24 receive and analyse this second transfer request. If the transfer of data should be accepted, corresponding transfer replies are sent back to the central unit 31. Subsequently, data can be transferred to all second terminal devices 21, ..., 24 that have accepted the transfer of data. Again, data can either be stored at the central unit 31 or transferred to the second terminal devices 21, ... , 24 without storing.

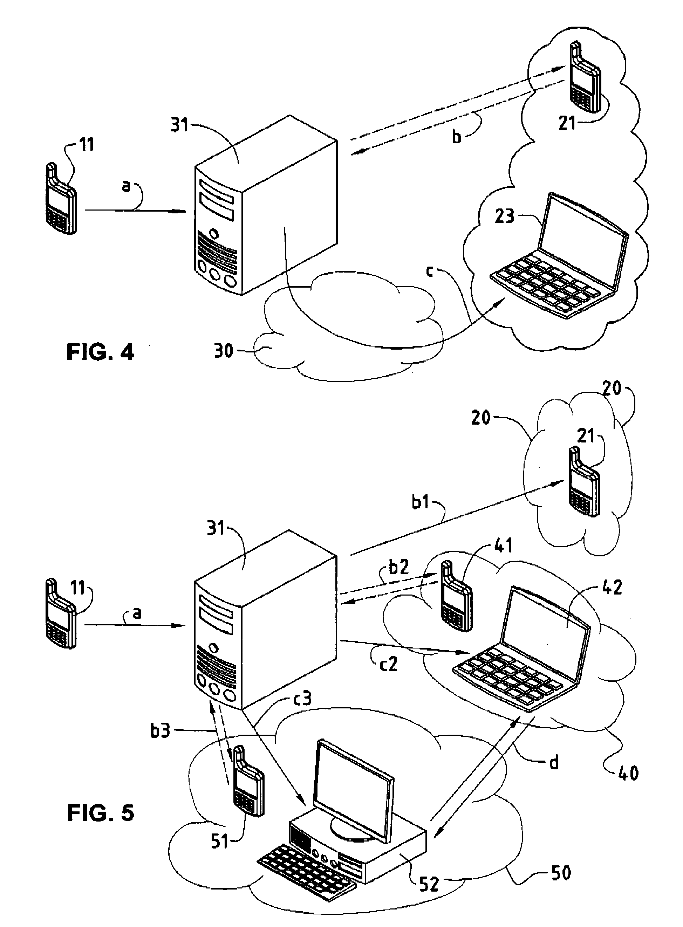

Figure 4 illustrates schematically another particular embodiment of the method for transferring data according to the invention. In Figure 4, the reference numeral 11 refers again to a first terminal device. The first terminal device 11 of Figure 4 can for example be a mobile phone. The reference numerals 21 and 23 refer to second terminal devices. The second terminal device 21 of Figure 4 can for example also be a mobile phone, while the second terminal device 21 can be a laptop or notebook computer. Of course, the first and second terminal devices 11, 21 and 23 can be any other appropriate terminal device, as already mentioned. The reference numeral 31 in Figure 4 refers again to a central unit.

In this particular embodiment of the method for transferring data according to the invention, the first terminal device 11 again wants to send data to the second terminal device 21. In this sense, the first terminal device 11 creates a transfer request and transmits this transfer request to the central unit 31 in the step a. This transfer request of the first terminal device 11 comprises again at least an identification of the destination (i.e. of the second terminal device 21) and a specification of data to be transferred. Any appropriate identification of the second terminal device 21 can again be used, e.g. the phone number of the terminal device 21. The central unit 31 receives the transfer request of the first terminal device 11 and analyses the request as explained before. Based on the received identification of the destination, the central unit 31 identifies the second terminal device 21 and retrieves the stored connection data of the second terminal device 21. Then, the central unit 31 creates the second transfer request and sends this second transfer request to the second terminal device 21. The second terminal device 21 receives and analyses the second transfer request. In this particular embodiment however, the user of the second terminal device 21 does not want to receive data on the second terminal device 21, but rather to receive these data on the second terminal device 23. For example, if the data to be transferred comprise voluminous project files, user might be interested to store them on the laptop computer, where these data can be used in a more appropriate way. Also, the user of the second terminal device 21 might be busy and thus interested in redirecting the transfer of data to the second terminal device 23. In this case, the second terminal device 21 creates a redirection reply comprising at least an identification of another second terminal device 23 from the group of devices 20 and sends this redirection reply to the central unit 31. The reference numeral b refers to the step comprising the reception of the second transfer request by the second terminal device 21 and the subsequent sending of the redirection reply to the central unit 31. When the redirection reply is received at the central unit 31, the central unit 31 modifies the second transfer request and sends it to the designated other second terminal device 23 in step c. If the second terminal device 23 accepts the transfer of data, a corresponding transfer reply is sent back to the central unit 31. Finally, data can be transferred to the second terminal device 21 from the buffer at the central unit 31 or directly from the first terminal device 11.

The connection data of each terminal device 11, ..., 24 stored at the central unit 31 can in particular contain the IP-address and/or port number of the available communication interface(s). Moreover, the stored connection data can also comprise information about the device type and available capacities (e.g. the size of the storage capacities etc.). Therefore, the central unit 31 can choose to transfer the transfer request to the second terminal device 21, ..., 24 through one first communication channel, and subsequently send data through another communication channel. Moreover, the central unit 31 can decide to send the second transfer request to the second terminal device 21 through a first communication channel, but resend this second transfer request to the second terminal device 23 through a second communication channel. In the particular case, the second terminal device 23 could be a laptop or desktop computer connected to the Internet 30 via a high-speed connection, such as xDSL (Digital Subscriber Lines). Thus, the central unit 31 could send both the second transfer request and the subsequent data to the second terminal device 23 through this high-speed connection.

Figure 5 illustrates schematically another particular embodiment of the method for transferring data according to the invention. In Figure 5, the reference numeral 11 refers again to a first terminal device. The first terminal device 11 of Figure 5 can for example be a mobile phone, however any other appropriate terminal device can be used. The reference numerals 21, 41, 42, 51 and 52 refer to second terminal devices. The second terminal devices 21, 41, and 51 of Figure 5 can for example also be mobile phones, the second terminal device 42 can be a laptop or notebook computer, and the second terminal device 52 can be a desktop computer Of course, the second terminal devices 21, 41, 42, 51 and 52 can be any other appropriate terminal device, as mentioned. The second terminal device 21 is member of the group of terminal devices 20. The group of terminal devices 40 comprises the second terminal device 41 and 42, while the second terminal devices 51 and 52 are members of the group of terminal devices 50. The reference numeral 31 in Figure 5 refers again to a central unit.

In this particular embodiment of the method for transferring data according to the invention, the first terminal device 11 wants to send data to the members of the groups of second terminal devices 20, 40 and 50. The three groups of terminal devices 20, 40 and 50 can in particular represent different terminal devices of three particular users. In this case, the first terminal device 11 creates a transfer request containing the three identifications of destination and transmits this transfer request to the central unit 31 in the step a. The central unit 31 receives the transfer request of the first terminal device 11 and analyses the request. Based on the received identifications of the destination, the central unit 31 identifies the second terminal devices 21, 41 and 51 and retrieves the stored connection data of these second terminal devices 21, 41 and 51. Of course, the second terminal devices 21, 41 and 51 can be understood as representing the three groups of terminal devices 20, 40 and 50, respectively. Subsequently, the central unit 31 creates three second transfer requests and sends them to the second terminal devices 21 (in the step b1), 41 (in the step b2) and 51 (in the step b3). The second terminal device 21 receives the second transfer request and accepts the transfer of data. The data are then transferred to the second terminal device 21, either through the central unit 31 or directly from the first terminal device 11. On the other hand, the second terminal device 41 refuses to receive data directly and sends the redirection reply to the central unit 31. The central unit 31 then resends the second transfer request to the second terminal device 42 (in step c2). Similarly, the second terminal device 51 also refuses to receive data directly and sends the redirection reply to the central unit 31. The central unit 31 then resends the second transfer request to the second terminal device 52 (in step c3). When both the second terminal device 42 and the second terminal device 52 accept the transfer of data, they send a corresponding transfer reply back to the central unit 31.

In this particular embodiment, both the second terminal device 42 and the second terminal device 52 can be connected to the internet through a high-speed connection, such that the peer-to-peer connection between these two terminal devices can easily be established. The central unit 31 therefore can divide the data to be transferred to the second terminal devices 42 and 52 into two different chunks and transfer to each second terminal device 42 and 52 only one of these different chunks. For example, the second terminal device 42 can receive the first half of the data to be transferred, while the second terminal device 52 receives the second part of these data. After the second terminal devices 42 and 52 have received their chunks, the missing chunks can be interchanged between them directly through separate communication channels (in step d). In this case, the second terminal device 42 could transfer the first half of the data to the second terminal device 52, while the second half of the data is transferred in the opposite direction.

Basically, the data can be transferred to the second terminal devices either in a client-server, or peer-to-peer mode. The client-server mode can for example in particular be used for the upload of the data to the central unit 31. In the same way, depending on the technology of the recipient, the central unit 31 can choose to simply download the data to each second mobile device. This mode might in particular be used when the second terminal devices are connected through a low-speed and/or bandwidth connection, or if the size of data is small. In the peer-to-peer mode, the central unit 31 distributes different chunks of data between several second terminal devices. Thus, each second terminal device has a portion of the entire data. They then directly interchange the missing portions in order to complete the data. In this case, the second terminal devices will usually be connected through a high-speed connection. The main benefit of using peer-to-peer mode is the reduction of traffic in the mobile (or cellular) network. Thus, this invention combines the traditional client/server and peer-to-peer technologies to use the most efficient transfer technology.

The method, the central unit and the terminal device for transferring data according to the invention provide a possibility for sending and receiving data from and to mobile devices in a very comfortable way. In this respect, the method, the central unit and the terminal device according to the present invention for example allow a much easier way of exchange of local contents. Moreover, the method, the central unit and the terminal device for transferring data according to the invention propose a solution which economise the available communication resources and increase the overall transfer speed. Nevertheless, all cited examples are given solely for information purposes, and a person skilled in the art can easily appreciate that a whole range of other services can be implemented in a similar manner.

Although the present disclosure has been described with reference to particular means, materials and embodiments, one skilled in the art can easily ascertain from the foregoing description the essential characteristics of the present disclosure, while various changes and modifications may be made to adapt the various uses and characteristics without departing from the scope of the present invention as set forth in the following claims.

## Claims

1. Method for transferring data between a first terminal device (11, 12, 13, 14) and at least one second terminal device (21, 22, 23, 24), the first terminal device (11, 12, 13, 14) and the second terminal devices (21, 22, 23, 24) connecting to and registering with a central unit (31), being such that:
the connection data of the first terminal device (11, 12, 13, 14) and the second terminal device (21, 22, 23, 24) are sent to the central unit (31), the connection data of the first and second terminal devices (11, 12, ..., 24) being stored in a lookup table of the central unit (31) in a way assigned to the corresponding terminal device (11, 12, ..., 24),
a first transfer request comprising at least a specification of data (17, 18, 19) to be transferred and an identification of the destination is created and sent to the central unit (31) by the first terminal device (11, 12, 13, 14),
at least one corresponding second terminal device (21, 22, 23, 24) is identified based on the received identification of the destination, and the appropriate connection data of the second terminal device (21, 22, 23, 24) are retrieved from the lookup table of the central unit (31),
a second transfer request is created based on the first transfer request and the retrieved connection data of the second terminal device (21, 22, 23, 24), and is sent to the second terminal device (21, 22, 23, 24) by the central unit (31),
when the second transfer request is received by the second terminal device (21), a redirection reply comprising at least an identification of another second terminal device (23) from a group of devices (20) is created and sent to the central unit (31) by the second terminal device (21), the second transfer request being resent to the other second terminal device (23) of the group of devices (20) by the central unit (31), and
the transfer of data (17, 18, 19) is accepted by the other second terminal device (23), the data (17, 18, 19) being transferred to the other second terminal device (23).

2. Method for transferring data according to claim 1, **characterised in that**, when the first transfer request is received by the central unit (31), the data (17, 18, 19) to be transferred to the second terminal device (21, 22, 23, 24) are retrieved and stored in a storage module of the central unit (31).

3. Method for transferring data according to any one of the claims 1 or 2, **characterised in that** the identification of the destination corresponds to a designation of a group of devices (20, 40, 50).

4. Method for transferring data according to claim 3, **characterised in that** the group of devices (20, 40, 50) comprises different second terminal devices (21, 22, 23, 24) of one single user.

5. Method for transferring data according to claim 3, **characterised in that** the group of devices (20, 40, 50) comprises second terminal devices (21, 22, 23, 24) of a particular group of users.

6. Method for transferring data according to any one of the claims 1 to 5, **characterised in that** the identification of the group of devices (20, 40, 50) is a telephone number and/or a user name.

7. Method for transferring data according to any one of the claims 1 to 6, **characterised in that** the connection data of the first and second terminal devices (11, 12, ..., 24) comprise the IP-address and/or port number of the device.

8. Method for transferring data according to any one of the claims 1 to 7, **characterised in that** the transfer request from the central unit (31) to the second terminal device (21, ..., 52) is sent through a first communication channel, and that the data (17, 18, 19) from the central unit (31) to the other second terminal device (23) are transferred through a second communication channel.

9. Method for transferring data according to any one of the claims 1 to 8, **characterised in that** the data (17, 18, 19) are transferred to the other second terminal device (23) through a separate communication channel.

10. Method for transferring data according to any one of the claims 1 to 9, **characterised in that** the first transfer request comprises at least two identifications of the destination,
that at least two corresponding second terminal devices (21, ..., 52) are identified based on the received identifications of the destination, and the appropriate connection data of the identified second terminal devices (21, ..., 52) are retrieved from the lookup table of the central unit (31),
that at least two second transfer requests are created based on the first transfer request and the retrieved connection data of the identified second terminal devices (21, ..., 52), and sent to the at least two second terminal devices (21, ... , 52) by the central unit (31), and
that the transfer of data (17, 18, 19) is accepted by the at least two second terminal devices (21, ..., 52), the data (17, 18, 19) being transferred to the two second terminal devices (21, ..., 52).

11. Method for transferring data according to claim 10, **characterised in that** the transfer of data (17, 18, 19) to the at least two second terminal devices (21, ..., 52) is simultaneous.

12. Method for transferring data according to claims 10 or 11, **characterised in**
**that** the data (17, 18, 19) to be transferred to the at least two second terminal devices (21, ..., 52) are divided into at least two chunks by the central unit (31), different chunks being transferred to different second terminal devices (21, ..., 52), and
**that** the missing chunks are interchanged between the at least two second terminal devices (21, ... 52) through separate communication channels.

13. Method for transferring data according to any one of the claims 1 to 12, **characterised in that** at least one communication channel is encrypted.

14. Central unit (31) for transferring data between a first terminal device (11, 12, 13, 14) and at least one second terminal device (21, 22, 23, 24), the central unit comprising:
a connection module (32) for receiving connection data of the first terminal device (11, 12, 13, 14) and the second terminal device (21, 22, 23, 24) and a store module (33) for storing the received connection data of the first and second terminal devices (11, 12, ..., 24) in a lookup table (34) of the central unit (31) in a way assigned to the corresponding terminal device (11, 12, ..., 24),
a reception module (35) for receiving a first transfer request comprising at least a specification of data (17, 18, 19) to be transferred and an identification of the destination from the first terminal device (11, 12, 13, 14),
an identification module (36) for identifying at least one corresponding second terminal device (21, 22, 23, 24) based on the received identification of the destination, and for retrieving the appropriate connection data of the identified second terminal device (21, 22, 23, 24) from the lookup table (34),
a query module (37) for creating a second transfer request based on the received first transfer request and the retrieved connection data of the second terminal device (21, 22, 23, 24),
a transmission module (38) for sending the second transfer request to the second terminal device (21, 22, 23, 24),
a redirection module (38) for receiving a redirection reply comprising at least an identification of another second terminal device (23) from the second terminal device (21) and for resending the second transfer request to the other second terminal device (23),
a transfer module (39) for transferring data (17, 18, 19) to the other second terminal device (23), if a transfer reply has been received from the other second terminal device (23) indicating that the transfer of data has been accepted by the other second terminal device (23).

15. Central unit (31) for transferring data according to claim 14, **characterised by** comprising a storage module (35a) for storing the data (17, 18, 19) to be transferred to the second terminal device (21, 22, 23, 24).

16. Central unit (31) for transferring data according to any one of the claims 14 to 15, **characterised by** comprising a division module (39) for dividing the data (17, 18, 19) to be transferred to at least two second terminal devices (21, ..., 52) into at least two chunks, and for sending different chunks to different second terminal devices (21, ..., 52).

## Patentansprüche

1. Verfahren zur Übertragung von Daten zwischen einem ersten Endgerät (11, 12, 13, 14) und mindestens einem zweiten Endgerät (21, 22, 23, 24), wobei das erste Endgerät (11, 12, 13, 14) und die zweiten Endgeräte (21, 22, 23, 24) mit einer Zentraleinheit (31) verbunden und in dieser registriert sind, wobei
die Verbindungsdaten des ersten Endgerätes (11, 12, 13, 14) und des zweiten Endgerätes (21, 22, 23, 24) zu der Zentraleinheit (31) gesendet werden und die dem entsprechenden Endgerät (11, 12, ..., 24) zugeordneten Verbindungsdaten der ersten und zweiten Endgeräte (11, 12, ..., 24) in einer Lookup-Tabelle der Zentraleinheit (31) gespeichert sind,
eine erste Übertragungsanforderung, die wenigstens eine Spezifikation von zu übertragenden Daten (17, 18, 19) und eine Identifikation der Bestimmung umfasst, erzeugt und an die Zentraleinheit (31) durch das erste Endgerät (11, 12, 13 , 14) gesendet wird,
wenigstens ein zweites entsprechendes Endgerät (21, 22, 23, 24) basierend auf der empfangenen Identifikation der Bestimmung identifiziert wird, und die geeigneten Verbindungsdaten des zweiten Endgerätes (21, 22, 23, 24) aus der Lookup-Tabelle der Zentraleinheit (31) abgerufen werden,
eine zweite Übertragungsanforderung basierend auf der ersten Übertragungsanforderung und der abgerufenen Verbindungsdaten des zweiten Endgerätes (21, 22, 23, 24) erzeugt und zu dem zweiten Endgerät (21, 22, 23, 24) von der Zentraleinheit (31) gesendet wird,
wenn die zweite Übertragungsanforderung von dem zweiten Endgerät (21) empfangen wird, wird eine Umleitungsantwort mit wenigstens einer Identifikation eines weiteren zweiten Endgerätes (23) aus einer Gruppe von Geräten (20) erzeugt und zu der Zentraleinheit (31) durch das zweite Endgerät (21) gesendet wird, wobei die zweite Übertragungsanforderung zu dem weiteren zweiten Endgerät (23) der Gruppe von Geräten (20) durch die Zentraleinheit (31) zurückgeschickt werden, und
die Übertragung von Daten (17, 18, 19) von dem weiteren zweiten Endgerät (23) akzeptiert wird, wobei die Daten (17, 18, 19) zu dem weiteren zweiten Gerät (23) übertragen werden.

2. Verfahren zum Übertragen von Daten nach Anspruch 1, **dadurch gekennzeichnet, dass**, wenn die erste Übertragungsanforderung von der Zentraleinheit (31) empfangen wird, die Daten (17, 18, 19), die zu dem zweiten Endgerät (21, 22, 23, 24) zu übertragen sind, abgerufen und in einem Speichermodul der Zentraleinheit (31) gespeichert werden.

3. Verfahren zum Übertragen von Daten nach Anspruch 1 oder 2, **dadurch gekennzeichnet, dass** die Identifikation der Bestimmung einer Bezeichnung einer Gruppe von Geräten (20, 40, 50) entspricht.

4. Verfahren zum Übertragen von Daten nach Anspruch 3, **dadurch gekennzeichnet, dass** die Gruppe von Geräten (20, 40, 50) unterschiedliche zweite Endgeräte (21, 22, 23, 24) von einem einzigen Benutzer umfasst.

5. Verfahren zum Übertragen von Daten nach Anspruch 3, **dadurch gekennzeichnet, dass** die Gruppe von Geräten (20, 40, 50) zweite Endgeräte (21, 22, 23, 24) einer besonderen Gruppe von Benutzern umfasst.

6. Verfahren zum Übertragen von Daten nach einem der Ansprüche 1 bis 5, **dadurch gekennzeichnet, dass** die Identifizierung der Gruppe von Geräten (20, 40, 50) eine Telefonnummer und/oder ein Benutzername ist.

7. Verfahren zum Übertragen von Daten nach einem der Ansprüche 1 bis 6, **dadurch gekennzeichnet, dass** die Verbindungsdaten von den ersten und den zweiten Endgeräten (11, 12, ..., 24) die IP-Adresse und/oder Port-Nummer des Gerätes umfassen.

8. Verfahren zum Übertragen von Daten nach einem der Ansprüche 1 bis 7, **dadurch gekennzeichnet, dass** die Übertragungsanforderung von der Zentraleinheit (31) zu dem zweiten Endgerät (21, ..., 52) über einen ersten Kommunikationskanal gesendet wird, und dass die Daten (17, 18, 19) von der Zentraleinheit (31) zu dem zweiten Endgerät (23) über einen zweiten Kommunikationskanal übertragen werden.

9. Verfahren zum Übertragen von Daten nach einem der Ansprüche 1 bis 8, **dadurch gekennzeichnet, dass** die Daten (17, 18, 19) zu dem weiteren zweiten Endgerät (23) über einen getrennten Kommunikationskanal übertragen werden.

10. Verfahren zum Übertragen von Daten nach einem der Ansprüche 1 bis 9, **dadurch gekennzeichnet, dass** die erste Übertragungsanforderung mindestens zwei Identifizierungen der Bestimmung umfasst,
dass mindestens zwei entsprechende zweite Endgeräte (21, ..., 52) basierend auf den empfangenen Identifizierungen der Bestimmung identifiziert werden, und die geeigneten Verbindungsdaten der identifizierten zweiten Endgeräte (21, ..., 52) aus der Lookup-Tabelle der Zentraleinheit (31) abgerufen werden,
dass mindestens zwei zweite Übertragungsanforderungen basierend auf der ersten Übertragungsanforderung und der abgerufenen Verbindungsdaten der zweiten identifizierten Endgeräten (21, ..., 52) erzeugt und an die mindestens beiden zweiten Endgeräte (21,..., 52) von der Zentraleinheit (31) gesendet werden, und
dass die Übertragung von Daten (17, 18, 19) von den mindestens beiden zweiten Endgeräten (21, ..., 52) akzeptiert wird, wobei die Daten (17, 18, 19) zu den beiden zweiten Endgeräten (21, ..., 52) übertragen werden.

11. Verfahren zum Übertragen von Daten nach Anspruch 10, **dadurch gekennzeichnet, dass** die Übertragung von Daten (17, 18, 19) zu den mindestens beiden zweiten Endgeräten (21, ..., 52) gleichzeitig erfolgt.

12. Verfahren zum Übertragen von Daten nach Anspruch 10 oder 11, **dadurch gekennzeichnet,**
**dass** die zu den mindestens beiden zweiten Endgeräten (21, ..., 52) zu übertragenden Daten (17, 18, 19) in mindestens zwei Blöcken von der Zentraleinheit (31) geteilt werden, wobei unterschiedliche Blöcke zu unterschiedlichen zweiten Endgeräten (21, ..., 52) übertragen werden, und
**dass** die fehlenden Blöcke zwischen den mindestens beiden zweiten Endgeräten (21, ... 52) durch getrennte Kommunikationskanäle ausgetauscht werden.

13. Verfahren zum Übertragen von Daten nach einem der Ansprüche 1 bis 12, **dadurch gekennzeichnet, dass** mindestens ein Kommunikationskanal verschlüsselt ist.

14. Zentraleinheit (31) zum Übertragen von Daten zwischen einem ersten Endgerät (11, 12, 13, 14) und mindestens einem zweiten Endgerät (21, 22, 23, 24), wobei die Zentraleinheit (31) folgende Module umfasst:
ein Verbindungsmodul (32) zum Empfang von Verbindungsdaten von dem ersten Endgerät (11, 12, 13, 14) und dem zweiten Endgerät (21, 22, 23, 24) und ein Speicher-Modul (33) zur Speicherung von den dem entsprechenden Endgerät (11, 12, ..., 24) zugeordneten empfangenen Verbindungsdaten der ersten und zweiten Endgeräte (11, 12, ..., 24) in einer Lookup-Tabelle (34) der Zentraleinheit (31),
ein Empfangsmodul (35) zum Empfangen einer ersten Übertragungsanforderung, die mindestens eine Spezifizierung von zu übertragenden Daten (17, 18, 19) und eine Identifikation der Bestimmung von dem ersten Endgerät (11, 12, 13, 14) umfasst,
ein Identifikationsmodul (36) zum Identifizieren wenigstens eines entsprechenden zweiten Endgerätes (21, 22, 23, 24) basierend auf der empfangenen Identifikation der Bestimmung, und zum Abrufen der geeigneten Verbindungsdaten des identifizierten zweiten Endgerätes (21, 22, 23, 24) aus der Lookup-Tabelle (34),
ein Anforderungsmodul (37) zum Erzeugen einer zweiten Übertragungsanforderung basierend auf der ersten empfangenen Übertragungsanforderung und der abgerufenen Verbindungsdaten des zweiten Endgerätes (21, 22, 23, 24),
ein Übermittlungsmodul (38) zum Senden der zweiten Übertragungsanforderung zu dem zweiten Endgerät (21, 22, 23, 24),
ein Umleitungsmodul (38) zum Empfang einer Umleitungsantwort mit mindestens einer Identifikation eines weiteren zweiten Endgerätes (23) von dem zweiten Endgerät (21) und zum Zurücksenden der zweiten Übertragungsantwort an das weitere zweite Endgerät (23),
ein Übertragungsmodul (39) zur Übertragung von Daten (17, 18, 19) zu dem weiteren zweiten Endgerät (23), wenn eine Übertragungsantwort von dem weiteren zweiten Endgerät empfangen wurde, die meldet, dass die Übertragung von Daten von dem weiteren zweiten Endgerät (23) angenommen wurde.

15. Zentraleinheit (31) zur Übertragung von Daten nach Anspruch 14, **gekennzeichnet durch** ein Speichermodul (35a) zum Speichern der Daten (17, 18, 19), die zu dem zweiten Endgerät (21, 22, 23, 24) übertragen werden müssen.

16. Zentraleinheit (31) zum Übertragen von Daten nach einem der Ansprüche 14 bis 15, **dadurch gekennzeichnet, dass** sie ein Teilungsmodul (39) zum Aufteilen der Daten (17, 18, 19), die zu mindestens zwei zweiten Endgeräten (21, ..., 52) zu übertragen sind, in mindestens zwei Blöcken, und zur Sendung von unterschiedlichen Blöcken zu unterschiedlichen zweiten Endgeräten (21, ..., 52).

## Revendications

1. Procédé pour transférer des données entre un premier terminal (11, 12, 13, 14) et au moins un deuxième terminal (21, 22, 23, 24), le premier terminal (11, 12, 13, 14) et le second terminal (21, 22, 23, 24) étant connectés à une unité centrale (31) et y étant enregistrés, dans lequel
les données de connexion du premier terminal (11, 12, 13, 14) et du second terminal (21, 22, 23, 24) sont envoyées à l'unité centrale (31), les données de connexion des premiers et seconds terminaux (11, 12, ..., 24) étant stockées et associées au terminal correspondant (11, 12, ..., 24) dans un tableau de correspondance de l'unité centrale (31),
une première demande de transfert comprenant au moins une spécification de données (17, 18, 19) à transférer et une identification de la destination, est créée et envoyée à l'unité centrale (31) par le premier terminal (11, 12, 13, 14),
au moins un second dispositif correspondant de terminal (21, 22, 23, 24) est identifié sur la base de l'identification reçue de la destination, et les données de connexion appropriées du second terminal (21, 22, 23, 24) sont appelées du tableau de correspondance de l'unité centrale (31),
une seconde demande de transfert est créée sur la base de la première demande de transfert et des données appelées de connexion, du second terminal (21, 22, 23, 24), et est envoyée au second terminal (21, 22, 23, 24) par l'unité centrale (31),
quand la seconde demande de transfert est reçue par le second terminal (21) une réponse de redirection comprenant au moins une identification d'un autre second terminal (23) d'un groupe de dispositifs (20) est créée et envoyée à l'unité centrale (31) par le second terminal (21), la seconde demande de transfert étant renvoyée par l'autre second terminal (23) du groupe de dispositifs (20) par l'unité centrale (31), et
le transfert de données (17, 18, 19) est accepté par l'autre second terminal (23) les données (17, 18, 19) étant transférées à l'autre second terminal (23).

2. Procédé pour transférer des données selon la revendication 1, **caractérisé en ce que**, lorsque la première demande de transfert est reçue par l'unité centrale (31), les données (17, 18, 19) à transférer au second terminal (21, 22, 23, 24) sont appelées et stockées dans un module de stockage de l'unité centrale (31).

3. Procédé pour transférer des données selon la revendication 1 ou 2, **caractérisé en ce que** l'identification de la destination correspond à une désignation d'un groupe de dispositifs (20, 40, 50).

4. Procédé pour transférer des données selon la revendication 3, **caractérisé en ce que** le groupe de dispositifs (20, 40, 50) comprend différents seconds terminaux (21, 22, 23, 24) d'un seul utilisateur.

5. Procédé pour transférer des données selon la revendication 3, **caractérisé en ce que** le groupe de dispositifs (20, 40, 50) comprend des seconds terminaux (21, 22, 23, 24) d'un groupe particulier d'utilisateurs.

6. Procédé pour transférer des données selon l'une quelconque des revendications 1 à 5, **caractérisé en ce que** l'identification du groupe de dispositifs (20, 40, 50) est un numéro de téléphone et/ou un nom d'utilisateur.

7. Procédé pour transférer des données selon l'une quelconque des revendications 1 à 7, **caractérisé en ce que** les données de connexion des premiers et seconds terminaux (11, 12, ..., 24) comprennent l'adresse IP et/ou le numéro de port du dispositif.

8. Procédé pour transférer des données selon l'une quelconque des revendications 1 à 7, **caractérisé en ce que** la demande de transfert de l'unité centrale (31) au second terminal (21, ..., 52) est envoyée via un premier canal de communication, et que les données (17, 18, 19) de l'unité centrale (31) à l'autre second terminal (23) sont transférées par un second canal de communication.

9. Procédé pour transférer des données selon l'une quelconque des revendications 1 à 8, **caractérisé en ce que** les données (17, 18, 19) sont transférées à l'autre second terminal (23) par un canal de communication séparé.

10. Procédé pour transférer des données selon l'une quelconque des revendications 1 à 9, **caractérisé en ce que** la première demande de transfert comprend au moins deux identifications de la destination,
qu'au moins deux seconds terminaux correspondants (21, ..., 52) sont identifiés sur la base des identifications reçues de la destination, et les données de connexion appropriées des seconds terminaux identifiés (21, ..., 52) sont appelées du tableau de correspondance de l'unité centrale (31),
qu'au moins deux secondes demandes de transfert sont créées sur la base de la première demande de transfert et sur les données appelées de connexion des seconds terminaux identifiés (21, ..., 52), et sont envoyées à au moins deux seconds terminaux (21,..., 52) par l'unité centrale (31), et
que le transfert de données (17, 18, 19) est accepté par au moins deux seconds terminaux (21, ..., 52), les données (17, 18, 19) étant transférées aux deux seconds terminaux (21, ..., 52).

11. Procédé pour transférer des données selon la revendication 11, **caractérisé en ce que** le transfert de données (17, 18, 19) au moins aux deux seconds terminaux (21, ..., 52) est simultané.

12. Procédé pour transférer des données selon les revendications 10 ou 11, **caractérisé en ce que** les données (17, 18, 19) à transférer à au moins deux seconds terminaux (21, ..., 52) sont divisées en au moins deux blocs par l'unité centrale (31), des blocs différents étant transférés à différents seconds terminaux (21, ..., 52), et
que les blocs manquants sont échangés entre au moins deux seconds terminaux (21, ... 52) par des canaux de communication séparés.

13. Procédé pour transférer des données selon l'une quelconque des revendications 1 à 12, **caractérisé en ce qu'**au moins un canal de communication est crypté.

14. Unité centrale (31) pour transférer des données entre un premier terminal (11, 12, 13, 14) et au moins un second terminal (21, 22, 23, 24), l'unité centrale comprenant :
un module de connexion (32) pour recevoir des données de connexion du premier terminal (11, 12, 13, 14) et du second terminal (21, 22, 23, 24) et un module de stockage (33) pour mémoriser les données de connexion reçues des premiers et seconds terminaux (11, 12, ..., 24) et les associer au terminal correspondant (11, 12, ..., 24) dans un tableau de correspondance (34) de l'unité centrale (31),
un module de réception (35) pour recevoir une première demande de transfert comprenant au moins une spécification de données (17, 18, 19) à transférer et une identification de la destination du premier terminal (11, 12, 13, 14),
un module d'identification (36) pour identifier au moins un second terminal correspondant (21, 22, 23, 24) sur la base de l'identification reçue de la destination, et pour extraire des données de connexion appropriées du second terminal identifié (21, 22, 23, 24) du tableau de correspondance (34),
un module de requête (37) pour créer une seconde demande de transfert basée sur la première demande de transfert et les données de connexion reçues du second terminal (21, 22, 23, 24),
un module de transmission (38) pour envoyer la demande de transfert au second terminal (21, 22, 23, 24),
un module de redirection (38) pour recevoir une réponse de redirection comprenant au moins une identification d'un autre second terminal (23) de la part du second terminal (21) et pour renvoyer la seconde demande de transfert à l'autre second terminal (23),
un module de transfert (39) pour transférer des données (17, 18, 19) à l'autre second terminal (23) si une réponse de transfert a été reçue de l'autre second terminal (23) indiquant que le transfert des données a été accepté par l'autre second terminal (23).

15. Unité centrale (31) pour transférer des données selon la revendication 14, **caractérisée en ce qu'**il comprend un module de stockage (35a) pour mémoriser les données (17, 18, 19) à transférer au second terminal (21, 22, 23, 24).

16. Unité centrale (31) pour transférer des données selon l'une quelconque des revendications 14 à 15, **caractérisée en ce qu'**elle comprend un module de division (39) pour diviser les données (17, 18, 19) à transférer au moins aux deux seconds terminaux (21, ..., 52) en au moins deux blocs, et l'envoi de blocs différents à différents seconds terminaux (21, ..., 52).
